# EUROPEAN PATENT SPECIFICATION

(11) **EP 4 297 165 B1**
(45) Date of publication and mention of the grant of the patent: **19.02.2025**
(21) Application number: 22180335.6
(22) Date of filing: 22.06.2022
(51) Int. Cl.: H01M 50/325, H01M 50/383, H01M 50/342, H01M 50/30

(54) **VENTILATION DEVICE FOR A BATTERY**
BELÜFTUNGSVORRICHTUNG FÜR EINE BATTERIE
DISPOSITIF DE VENTILATION POUR UNE BATTERIE

(43) Date of publication of application: 27.12.2023
(73) Proprietor: Newfrey LLC, New Britain, CT 06053 (US)
(72) Inventor: STAU, Bastian, 35394 Gießen (DE)
(74) Representative: SBD IPAdmin

(56) References cited:
- CN-A- 108 692 078
- CN-A- 110 573 777
- US-A1- 2021 396 324

## Description

The present invention relates to a ventilation device for a battery, and particularly to a venting device for a casing of a battery submodule, battery module or battery system that is configured for being integrated in that casing. More particularly, the present invention relates to a device for equalizing the internal pressure of a housing, in particular a battery housing of a motor vehicle, with the ambient pressure of the housing. Furthermore, the invention relates to a battery system comprising such ventilation device.

In housings (or casings) of battery systems, in particular high-voltage battery system, such as those used in motor vehicles, temperature and pressure changes result in pressure differences between the housing of the battery system and the environment.

These pressure differences must be balanced in normal operation. To provide thermal control of the enclosed components a thermal management system may be used to efficiently emit, discharge and/or dissipate heat generated within the casing. If such thermal management system is omitted or the heat drain from the casing is not sufficiently performed, an increase of the internal temperature can lead to abnormal reactions occurring therein.

In addition, there is a risk, especially in high-voltage battery systems with a large capacity, that one or more cells in the battery will fail due to overloading or other technical defects. This can result in large amounts of harmful gas, which must be discharged in a controlled manner. Thus, an emergency venting in case of technical defect within the battery has to be provided.

One can use two different devices for both functions, pressure compensation in normal operation and emergency venting in case of technical defects. However, two devices increase the weight of the assembly as well as the maintenance.

Document DE102017214754A1 discloses a device combining both functions. The device comprises a pressure equalization element. The pressure equalization element has an element body and a membrane arranged on the element body. The device comprises a connecting element for the airtight connection of the pressure compensation element to the housing. The element body rests airtight on the connecting element when there is an internal pressure which is lower than a limit pressure. Besides, the element body opens an aperture for exchanging gas when there is an internal pressure which is greater than the limit pressure. CN110573777, US2021396324 and CN108692078 also disclose ventilation units comprising a first ventilation body and a second ventilation body. The first ventilation body permits gas to flow from an inside of a housing to an outside of the housing when internal pressure is higher than external pressure by a value not less than a predetermined value, and is capable of returning to block flow of the gas from the inside of the housing to the outside of the housing. The second ventilation body permits gas to flow between the inside of the housing and the outside of the housing even when a pressure difference between the internal pressure and the external pressure is less than the predetermined value.

Such devices are adapted to deal with the pressure compensation function with the element body and the emergency venting with the membrane. However, a need still exists to improve such devices.

It is an object of the present invention to provide a venting device which fulfils both functions (emergency degassing in the event of damage as well as differential pressure compensation in normal work environment) and which is robust, easy to manufacture, to mount and to maintain, with as less parts as possible.

Accordingly, the present disclosure is directed to a ventilation device for a battery with a battery casing having a vent opening according to claim 1 and to a battery system according to claim 12

More particularly, the ventilation device comprises a housing, a cap cooperating with the housing, a first membrane adapted to ensure pressure balance between the inside of a battery system and its environment during normal operation conditions of the battery system. The device further comprises a second membrane adapted to ensure an emergency venting in case of technical defect within the battery system, wherein the cap comprises a first portion connected to the first membrane and a second portion connected to the second membrane. Thus, the cap is connected to both membranes, which renders the valve easy to mount and to maintain.

In an embodiment, the first membrane is a breathable membrane. Thus the membrane can easily ensure the pressure balance in a normal environment.

In an embodiment, the cap is airtight ultrasonically welded to the first membrane. The ultrasonic welding ensures a robust fixation, is easy to realize.

In an embodiment, the second membrane is press-fitted between the housing and the cap. The press-fittings have high connection strength and anti-vibration. The assembly can be automated and is reliable and consistent. Besides, such connections have the ability to withstand thermal expansion during thermal cycling.

According to the invention, the cap is substantially circular with a central portion adapted to be covered by the first membrane and an outer annular portion adapted to be partly covered by the second membrane. The cap is integral but ensures different functions depending on the portion linked to the first or the second membrane.

According to the invention, the central portion comprises a plurality of ventilation holes. The ventilation holes are facing the first membrane to ensure a correct pressure balance.

In an embodiment, the second outer annular portion comprises a plurality of openings regularly distributed. The openings are curved. The openings are facing the second membrane.

In an embodiment, the cap comprises a rim covering at least partly an outer periphery of the housing. Thus, the cap is a protective cap and can surround the housing.

In an embodiment, the central portion comprises an edge extending longitudinally along a longitudinal axis from the inner surface, wherein the edge defines one or a plurality of cavities. The edge forms a reinforcing structure for the rigidity of the device.

In an embodiment, the first membrane is fixed to the edge. The edge forms a surface and the first membrane can easily be fixed to this surface.

In an embodiment, the ventilation device further comprises a sealing ring extending around the housing. The sealing ring is adapted to sealingly fix the ventilation device to the casing.

In an embodiment, the second membrane is annular. In an embodiment, the first membrane has the shape of a disc. In an embodiment, the first membrane extends substantially in the centre of the second membrane. Thus a compact arrangement is provided.

In an embodiment, the first membrane is made of Polyethylene terephthalate (PET) or Polytetrafluoroethylene (PTFE) material. Such materials have high strength to weigh ratio and resistant to moisture.

In an embodiment, the second membrane is made of elastomer or thermoplastic elastomer material. Such materials are customizable in size, shape or flexibility.

The present invention is also directed to a battery system comprising a battery casing with a vent opening and a ventilation device, wherein the ventilation device (and more particularly its housing) is inserted in the vent opening.

A specific embodiment of the present invention will now be described, by way of example only and with reference to the accompanying drawings, of which:
Fig. 1 is a schematic perspective view of a battery system with a ventilation device according to the invention;
Fig. 2 is an exploded perspective view of the ventilation device of Fig. 1;
Fig. 3 is a side view in section of the ventilation device of Fig. 1 in a mounted state.

On the different figures, the same reference signs designate identical or similar elements.

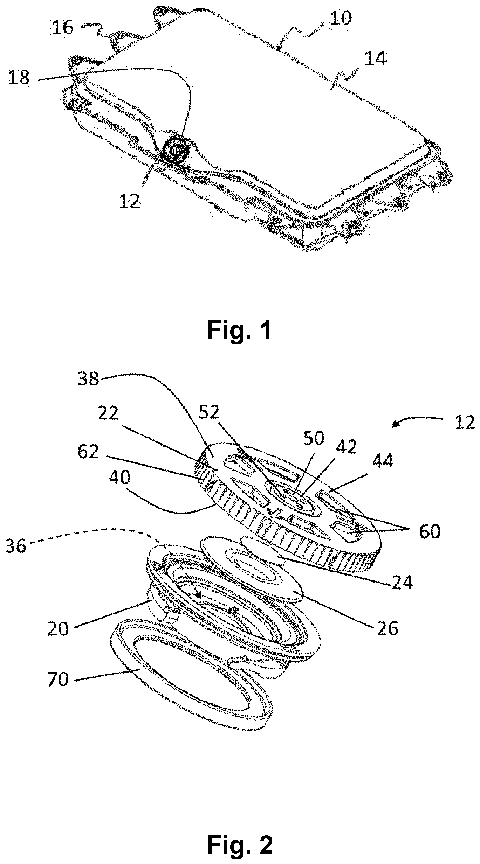

Fig. 1 illustrates a schematic perspective view of a battery system 10 with a ventilation device 12. The shape of the battery system 10 and the arrangement in Fig. 1 is for illustration purpose. The battery system 10 comprises a casing 14. In the context of the present application, a battery system 10 is to be understood as one of a battery submodule, a battery module and a battery pack. Hence the battery casing 14 is to be understood to be a casing of one of a battery submodule, a battery module and a battery system. The casing 14 may consist of a metal alloy and/or a plastic material. The battery system 10 may comprise a plurality of attachment portions 16 for mounting the battery system to a fixing structure, for example an electric vehicle. The casing 14 comprises a vent opening 18. More particularly, the casing may comprise 2 or 3 vent openings. Eventually more than 3 vent openings may also be provided.

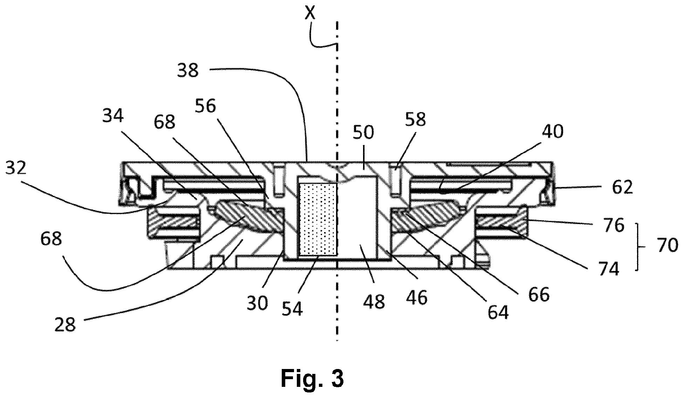

The vent opening 18 is adapted to receive the ventilation device 12. The ventilation device 12 is more particularly shown in Fig. 2 and Fig. 3. In an embodiment, the ventilation device 12 is configured to be attached to the casing 14 for covering and/or overlapping the vent opening. In another embodiment, the ventilation device 12 is configured to be inserted into the vent opening 18.

As depicted in Fig. 2, the ventilation device 12 comprises a housing 20, a cap 22, a first membrane 24 and a second membrane 26.

When the ventilation device 12 is configured to be inserted into the vent opening 18, the housing 20 of the ventilation device 12 cooperates with the vent opening 18. The housing 20 is for instance substantially annular around a longitudinal axis. However, in other embodiment, the shape of the housing 20 may be rectangular or oval. Actually, the shape of the housing 20 is complimentary with the shape of the vent opening 18. The housing 20 for example comprises a first flange 28 (see for instance Fig. 3) delimiting a central opening 30, and a second flange 32 radially outwardly extending from the first flange 28. A housing bent portion (housing elbow) 34 is arranged between the first and the second flange 28, 32 and connects said flanges 28, 32. The second flange 32 may have a substantially flat surface, wherein the first flange 28 may be inclined. The first flange 28 has for instance a reduced diameter with regard to the second flange. The first flange 28 may be provided with first flange openings 36. The housing 20 is adapted to cooperate with the cap 22 in a mounted state of the ventilation device 12.

The cap 22 is for instance a protective cap. The cap 22 comprises an outer surface 38 and an inner surface 40. The inner surface 38 faces the housing 20, wherein the outer surface 38 is opposite the inner surface 36. The cap 22 has a substantially circular shape. The cap has a first portion 42 which forms a central portion and a second portion 44 arranged around the first portion. The cap 22 is for instance integral. The first position 42 comprises an edge 46 which extends longitudinally from the inner surface 40 such as to delimit a cavity 48. For instance the edge 46 delimit a cavity 48 having a circular cross-section. The bottom 50 of the cavity 48 comprises at least one, but for instance a plurality of ventilation holes 52. A supporting structure 54 may extend between the edge 46 such as to delimit a plurality of sub-cavities and to render the cap 22 more rigid. The second portion 44 of the cap is an outer annular portion. The edge 46 is connected to the second portion 44 by a cap bent portion 56 (cap elbow), such that a groove 58 is formed at the outer surface 38 of the cap 22, the groove 58 separating the first portion 42 and the second portion 44. The second portion 44 may comprise a plurality of openings 60 regularly distributed, for instance around a longitudinal axis X. The cap 22 also comprises a rim 62 extending at its outer periphery from the inner surface 40. The rim 62 is adapted to cover at least partly an outer periphery of the housing 20. More particularly, as visible in Fig. 3, the rim 62 may cover longitudinally the second flange 32 of the housing.

The first membrane 24 is a breathable membrane. The first membrane 24 is for instance made of Polyethylene terephthalate (PET) or Polytetrafluoroethylene (PTFE) material. The first membrane 24 has a disc shape.

The second membrane 26 has an annular shape. The second membrane is for instance made of elastomer or thermoplastic elastomer.

The cap, 22, housing 20, first membrane 22 and second membrane 24 are mounted together such as to form the ventilation device 12. For example, all these parts have a substantially circular outer shape and their central axis (corresponding to the longitudinal axis X) coincide in a mounted state of the ventilation device.

The first membrane 24 is connected to the first portion 42 of the cap 22. More particularly, the first membrane 24 is airtight ultrasonically welded to the cap 22. For instance, the first membrane 24 is welded to the edge 46 of the cap 22, such that it covers the cavity 48 (or all the sub-cavities). The edge 48 comprises an edge surface substantially parallel to the inner surface 40 of the cap and the first membrane 24 is welded to the edge surface. Thus, the first membrane 24 is at a non-zero distance from the ventilation holes 52 and faces said ventilation holes 52. The diameter of the first membrane 24 corresponds substantially to the diameter of the edge 46 which delimits the cavity 48. Thus, the first membrane 24 covers entirely the cavity 48. As mentioned above, the supporting structure 54 may be arranged within the cavity. The supporting structure 54 may also support the first membrane 24. Eventually the first membrane 24 may be welded to the supporting structure 54.

The second membrane 26 is connected to the second portion 44 of the cap. The second membrane 26 has an annular shape, such that in the mounted state of the ventilation device 12, it surrounds the edge 46. More particularly, the surface defining the inner circle of the annular-shaped second membrane faces the edge 46 and is arranged under the cap bent portion 56. The second membrane is press-fitted between the cap 22 and the housing 20. More particularly the cap bent portion 56 comprises a cap edge 64, and the first flange 28 of the housing comprises a housing edge 66, facing the cap edge 64 in the mounted state of the ventilation device. The second membrane 26 is press-fitted between the cap edge 64 and the housing edge 66. For instance, a segment of the second membrane in the vicinity of the inner circle of the annular-shaped second membrane is press-fitted between the edges 64, 66. An outer periphery 68 of the second membrane forms a free end, such that the second membrane 26 (and more particularly a segment in the vicinity of the free end) can freely move with regard to the cap and the housing. The free end or outer periphery 68 is movable between a rest position, in which it rests against a surface of the housing 20 and an open position, for instance to ensure an emergency venting in case of technical defect within the battery system 10. The outer periphery 68 rests against the first flange 28. The second membrane 26 faces for instance the first flange openings 36. The portion of the second membrane which is movable faces the second portion 44 of the cap, and more particularly may face at least partly the plurality of second portion openings 60.

The ventilation device 12, notably when configured to be inserted into the vent opening 18, further comprises a sealing ring 70 extending around the housing 20. For instance, the housing 20 comprises on its external lateral surface a recess 72 adapted to receive the sealing ring 70. The sealing ring 70 is for instance made of elastomer or thermoplastic elastomer. The sealing ring 70 is for instance an O-ring. The sealing ring 70 is arranged below the second flange. It has a flat surface 74 substantially parallel to the second flange, and a lateral surface 76, orthogonal to the flat surface. The sealing ring 70 is such that the ventilation device 12 may be connected to the casing 14 in an airtight and watertight manner. The vent opening 16 has a shape complimentary to the shape of the housing 20 with the sealing ring 70.

In a mounted state of the ventilation device 12, the cap 22 cooperates with the housing 20 for instance with a snap fit connection. For example, as depicted in Fig. 3 the inner surface of the rim 62 is snap fitted with a portion of the housing 20. More particularly the rim is in a snap-fit connection with the lateral surface of the second flange 32 of the housing 20. In other embodiments, cap and housing may be press-fitted or glued or welded. The second membrane 26, as mentioned above is sandwiched between the cap 22 and the housing 20, wherein the first membrane 24 is fixed to the cap only. The inner diameter of the second membrane 26 is greater than the diameter of the first membrane 24.

Said ventilation device, when in a mounted state, is compact and allows, to fulfil the two functions needed in a battery system (pressure balance in a normal work environment and emergency venting in case of technical defect). These two functions are fulfilled with only few elements, i.e. the cap 22, the housing 20, the first and second membranes 24, 26 (and eventually the sealing ring 70). No further element is necessary. Besides, the arrangement of the first membrane 24 with regard to the second membrane 26 allows to realize a compact device. In a normal work environment, the first membrane balances the pressure between the interior of the casing and the outside environment. The ventilation holes allow a regular and easy ventilation and their position - at distance from the first membrane - decreases the risks of humidity entering the casing. As depicted in Fig. 3, the first membrane may be substantially below the housing, wherein the second membrane is arranged between the housing and the cap.

The ventilation device 12 is mounted in a vent opening of the battery system such that the first membrane is directed toward the interior of the casing, and the outer surface of the cap extends outside. The second membrane is arranged between the cap and the housing and is moved in the open position in case of technical defect for emergency venting. For instance, in case of emergency venting, the second membrane opens with an intern pressure being between 0.05 and 0.15 bar.
battery system 10
ventilation device 12
casing 14
attachment portions 16
vent opening 18
housing 20
cap 22
first membrane 24
second membrane 26
first flange 28
central opening 30
second flange 32
housing bent portion 34
first flange openings 36
outer surface 38
an inner surface 40
first portion 42
second portion 44
edge 46
cavity 48
bottom 50
ventilation holes 52
supporting structure 54
cap bent portion 56
groove 58
openings of the second portion 60
rim 62
cap edge 64
housing edge 66
outer periphery 68
sealing ring 70
recess 72
flat surface 74
lateral surface 76

## Claims

1. Ventilation device (12) for a battery system (10) with a battery casing (14) having a vent opening (18), comprising:
- a housing (20) adapted to be attached to the battery casing (14),
- a cap (22) with an outer surface (38) and an inner surface (40), wherein the inner surface (40) faces the housing (20), and wherein the cap (22) cooperates with the housing (20),
- a first membrane (24) adapted to ensure pressure balance between the inside of the casing (14) and its environment during normal operation conditions of the battery system,
- a second membrane (26) adapted to ensure an emergency venting in case of technical defect within the battery system (10),
wherein the cap (22) comprises a first portion (42) connected to the first membrane (24) and a second portion (44) connected to the second membrane (26), the cap (22) being substantially circular with a central portion (42) adapted to be covered by the first membrane (24) and an outer annular portion (44) adapted to be partly covered by the second membrane and
**characterized in that** the central portion (42) comprises a plurality of ventilation holes (52).

2. Ventilation device (12) according to claim 1, wherein the first membrane (24) is a breathable membrane, and wherein the cap (22) is welded to the first membrane (24).

3. Ventilation device (12) according to claim 1 or 2, wherein the second membrane (26) is press-fitted between the housing (20) and the cap (22).

4. Ventilation device (12) according to any of claims 1 to 3, wherein the outer annular portion (44) comprises a plurality of openings (60) regularly distributed.

5. Ventilation device (12) according to any of claims 1 to 4, wherein the cap (22) comprises a rim (62).

6. Ventilation device (12) according to any of claims 1 to 5, wherein the central portion (42) comprises an edge (46) extending longitudinally along a longitudinal axis (X) from the inner surface, wherein the edge (46) defines one or a plurality of cavities.

7. Ventilation device (12) according to claim 6, wherein the first membrane (24) is fixed to the edge.

8. Ventilation device (12) according to any of the preceding claims, further comprising a sealing ring (70) extending around the housing (20).

9. Ventilation device (12) according to any of the preceding claims, wherein the second membrane (26) is annular, and wherein the first membrane (24) is arranged substantially in the centre of the second membrane (26).

10. Ventilation device (12) according to claim any of the preceding claims, wherein the first membrane (24) is made of Polyethylene terephthalate (PET) or Polytetrafluoroethylene (PTFE) material.

11. Ventilation device (12) according to any of the preceding claims, wherein the second membrane (26) is made of elastomer or thermoplastic elastomer.

12. Battery system (10) comprising a battery casing with a vent opening (18) and a ventilation device (12) according to any of the preceding claims, wherein the housing (20) is inserted in the vent opening (18).

## Patentansprüche

1. Belüftungsvorrichtung (12) für ein Batteriesystem (10) mit einem Batteriegehäuse (14), das eine Entlüftungsöffnung (18) aufweist, umfassend:
- ein Gehäuse (20), das angepasst ist, um an dem Batteriegehäuse (14) befestigt zu werden,
- eine Kappe (22) mit einer Außenoberfläche (38) und einer Innenoberfläche (40), wobei die Innenoberfläche (40) dem Gehäuse (20) zugewandt ist, und wobei die Kappe (22) mit dem Gehäuse (20) zusammenwirkt,
- eine erste Membran (24), die angepasst ist, um unter normalen Betriebsbedingungen des Batteriesystems für einen Druckausgleich zwischen dem Inneren des Gehäuses (14) und seiner Umgebung zu sorgen,
- eine zweite Membran (26), die angepasst ist, um im Falle eines technischen Defekts innerhalb des Batteriesystems (10) für eine Notlüftung zu sorgen,
wobei die Kappe (22) einen ersten Abschnitt (42), der mit der ersten Membran (24) verbunden ist, und einen zweiten Abschnitt (44), der mit der zweiten Membran (26) verbunden ist, umfasst, wobei die Kappe (22) im Wesentlichen kreisförmig mit einem zentralen Abschnitt (42) ist, der angepasst ist, um von der ersten Membran (24) bedeckt zu werden, und einem äußeren ringförmigen Abschnitt (44), der angepasst ist, um teilweise von der zweiten Membran bedeckt zu werden, und
**dadurch gekennzeichnet, dass** der zentrale Abschnitt (42) eine Vielzahl von Belüftungslöchern (52) umfasst.

2. Belüftungsvorrichtung (12) nach Anspruch 1, wobei die erste Membran (24) eine atmungsaktive Membran ist und wobei die Kappe (22) mit der ersten Membran (24) verschweißt ist.

3. Belüftungsvorrichtung (12) nach Anspruch 1 oder 2, wobei die zweite Membran (26) zwischen dem Gehäuse (20) und der Kappe (22) eingepresst ist.

4. Belüftungsvorrichtung (12) nach einem der Ansprüche 1 bis 3, wobei der äußere ringförmige Abschnitt (44) eine Vielzahl von regelmäßig verteilten Öffnungen (60) umfasst.

5. Belüftungsvorrichtung (12) nach einem der Ansprüche 1 bis 4, wobei die Kappe (22) einen Rand (62) umfasst.

6. Belüftungsvorrichtung (12) nach einem der Ansprüche 1 bis 5, wobei der zentrale Abschnitt (42) eine Kante (46) umfasst, die sich von der Innenoberfläche aus in Längsrichtung entlang einer Längsachse (X) erstreckt, wobei die Kante (46) einen oder eine Vielzahl von Hohlräumen definiert.

7. Belüftungsvorrichtung (12) nach Anspruch 6, wobei die erste Membran (24) an der Kante fixiert ist.

8. Belüftungsvorrichtung (12) nach einem der vorstehenden Ansprüche, die weiter einen Dichtungsring (70) umfasst, der sich um das Gehäuse (20) herum erstreckt.

9. Belüftungsvorrichtung (12) nach einem der vorstehenden Ansprüche, wobei die zweite Membran (26) ringförmig ist und wobei die erste Membran (24) im Wesentlichen in der Mitte der zweiten Membran (26) angeordnet ist.

10. Belüftungsvorrichtung (12) nach einem vorstehenden Anspruch, wobei die erste Membran (24) aus Polyethylenterephthalat- (PET) oder Polytetrafluorethylen- (PTFE) Material hergestellt ist.

11. Belüftungsvorrichtung (12) nach einem der vorstehenden Ansprüche, wobei die zweite Membran (26) aus Elastomer oder thermoplastischem Elastomer hergestellt ist.

12. Batteriesystem (10), das ein Batteriegehäuse mit einer Entlüftungsöffnung (18) und eine Belüftungsvorrichtung (12) nach einem der vorstehenden Ansprüche umfasst, wobei das Gehäuse (20) in die Entlüftungsöffnung (18) eingesetzt ist.

## Revendications

1. Dispositif de ventilation (12) pour un système de batterie (10) avec un boîtier de batterie (14) présentant une ouverture d'évent (18), comprenant :
- un boîtier (20) adapté pour être fixé au boîtier de batterie (14),
- un couvercle (22) avec une surface externe (38) et une surface interne (40), dans lequel la surface interne (40) fait face au boîtier (20) et dans lequel le couvercle (22) coopère avec le boîtier (20),
- une première membrane (24) adaptée pour assurer un équilibre de pression entre l'intérieur du boîtier (14) et son environnement dans des conditions de fonctionnement normales du système de batterie,
- une seconde membrane (26) adaptée pour assurer une ventilation d'urgence en cas de défaut technique dans le système de batterie (10),
dans lequel le couvercle (22) comprend une première partie (42) reliée à la première membrane (24) et une seconde partie (44) reliée à la seconde membrane (26), le couvercle (22) étant sensiblement circulaire avec une partie centrale (42) adaptée pour être recouverte par la première membrane (24) et une partie annulaire externe (44) adaptée pour être partiellement recouverte par la seconde membrane et
**caractérisé en ce que** la partie centrale (42) comprend une pluralité de trous de ventilation (52).

2. Dispositif de ventilation (12) selon la revendication 1, dans lequel la première membrane (24) est une membrane respirante et dans lequel le couvercle (22) est soudé à la première membrane (24).

3. Dispositif de ventilation (12) selon la revendication 1 ou 2, dans lequel la seconde membrane (26) est ajustée par pression entre le boîtier (20) et le couvercle (22).

4. Dispositif de ventilation (12) selon l'une quelconque des revendications 1 à 3, dans lequel la partie annulaire externe (44) comprend une pluralité d'ouvertures (60) régulièrement réparties.

5. Dispositif de ventilation (12) selon l'une quelconque des revendications 1 à 4, dans lequel le couvercle (22) comprend un rebord (62).

6. Dispositif de ventilation (12) selon l'une quelconque des revendications 1 à 5, dans lequel la partie centrale (42) comprend un bord (46) s'étendant longitudinalement le long d'un axe longitudinal (X) à partir de la surface interne, dans lequel le bord (46) définit une cavité ou une pluralité de cavités.

7. Dispositif de ventilation (12) selon la revendication 6, dans lequel la première membrane (24) est fixée au bord.

8. Dispositif de ventilation (12) selon l'une quelconque des revendications précédentes, comprenant en outre une bague d'étanchéité (70) s'étendant autour du boîtier (20).

9. Dispositif de ventilation (12) selon l'une quelconque des revendications précédentes, dans lequel la seconde membrane (26) est annulaire et dans lequel la première membrane (24) est agencée sensiblement au centre de la seconde membrane (26).

10. Dispositif de ventilation (12) selon l'une quelconque des revendications précédentes, dans lequel la première membrane (24) est réalisée en un matériau en polyéthylène téréphtalate (PET) ou en polytétrafluoroéthylène (PTFE).

11. Dispositif de ventilation (12) selon l'une quelconque des revendications précédentes, dans lequel la seconde membrane (26) est réalisée en élastomère ou en élastomère thermoplastique.

12. Système de batterie (10) comprenant un boîtier de batterie avec une ouverture d'évent (18) et un dispositif de ventilation (12) selon l'une quelconque des revendications précédentes, dans lequel le boîtier (20) est inséré dans l'ouverture d'évent (18).
